Europäisches Patentamt

European Patent Office

Office européen des brevets

(11) Publication number: **0 076 084**
**A1**

(12) # EUROPEAN PATENT APPLICATION

(21) Application number: **82304970.5**

(22) Date of filing: **21.09.82**

(51) Int. Cl.³: **A 61 C 5/08**

(30) Priority: **24.09.81 GB 8128960**

(43) Date of publication of application:
**06.04.83 Bulletin 83/14**

(84) Designated Contracting States:
**AT BE CH DE FR GB IT LI LU NL SE**

(71) Applicant: **Carse, Murray Duncan**
**6 Queensway House**
**Hatfield Hertfordshire AL10 0NR(GB)**

(72) Inventor: **Carse, Murray Duncan**
**6 Queensway House**
**Hatfield Hertfordshire AL10 0NR(GB)**

(74) Representative: **Smith, Philip Antony et al,**
**REDDIE & GROSE 16 Theobalds Road**
**London WC1X 8PL(GB)**

(54) **Dental pinning device.**

(57) A synthetic resin shank 10 has a flat 11 and groove 12 for engagement with a latching handpiece. A metal end-piece has a spigot 16 with screw-driver flats 17, 18 which fit in a mating socket 13 in the shank. The end-piece has a threaded pin 19 for insertion in the tooth, an anchor section consisting of bulbous portions 22 and 23 and a shearing neck 21.

FIG 1

FIG 2

DENTAL PINNING DEVICE

The present invention relates to dental pinning devices which are used to insert pins into the structure of a broken or worn down tooth to receive a restoration or superstructure. The invention is particularly concerned with self-threading pins which are screwed into a pre-drilled hole in the tooth.

Various pinning devices have been described and are in use for insertion of a self-threading pin to act as an anchor for a restoration. In particular U.K. Patent Specification No. 1,482,681 describes a pinning device which comprises a shank of which one end is provided with a flat and a part-annular groove for engagement in conventional manner with a latching-type dental hand piece. The pin is formed integrally with the metal shank and is connected to the other end of the shank by a narrow neck. When the pin is screwed into the tooth and bottoms in the pre-drilled hole, continued rotation of the shank causes shearing of the neck and leaves the pin projecting from the tooth. This is thus a self-shearing pin. An improved form of integral pinning device which enables the pin to align itself in the pre-drilled hole is described in my U.K. Patent Specification No. 1,597,483.

There is also available on the market the Whaledent "Linkpin" dental pinning device in which the shank is moulded from a synthetic resin material and has at one end the flat and part-annular groove for latching into a hand-piece. The threaded pin is part of a metal portion which includes the shearing neck and has a spigot which is fitted into a bore in the end of the shank. The bore has two diametrically opposed grooves extending along its length and the spigot has a flattened region which engages with the grooves. A joint is thus formed which ensures rotation of the pin by the shank while allowing some swinging movement of the pin.

In accordance with the present invention there is provided a dental pinning device comprising a shank formed from a synthetic resin material and a metallic end-piece engaged with the shank, the shank having at one end a formation for engagement in a latching-type dental handpiece and at the other end a socket to receive the end - piece, the end-piece comprising a threaded pin, a shearing neck and a spigot for engagement in the socket, the spigot and socket having complementary mating shapes including a driving flat to ensure rotation of the pin by the shank.

Such a composite pinning device with synthetic resin shank and metal end-piece is easier to manufacture because the mating shapes of the spigot and socket are simple and easy to produce. Moreover a more secure fastening of the end- piece to the shank can be achieved, which gives greater accuracy and safety in use. Preferably the shank is tapered, as in U.K. Specification No. 1,597,483, to provide for alignment of the pin with the hole in the tooth by swinging of the shank relative to the handpiece.

In a preferred embodiment the end piece of the pinning device has a short threaded pin section intended to be received in the hole in the tooth, an anchor section intended to project from the tooth and receive the restoration and having at least two bulbous portions separated by a region of smaller diameter, a shearing neck, and the spigot for insertion in the socket of the shank. The shape of the anchor section is designed to give the best bond with the restoration and for the purpose may be more satisfactory than a continuation of the thread used to secure the pin in the tooth. It will be apparent that this feature can be used in any self-shearing pin.

The invention will now be described in more detail with the aid of an example illustrated in the accompanying drawings, in which:-

Fig. 1 is a side view, partly in section, of the shank of a dental pinning device in accordance with the invention before assembly with the  metallic end-piece,

Fig. 2 is a side view of an end-piece for assembly with the shank of Fig.1, and

Fig.3 shows how a plurality of shanks are moulded simultaneously in a single moulding.

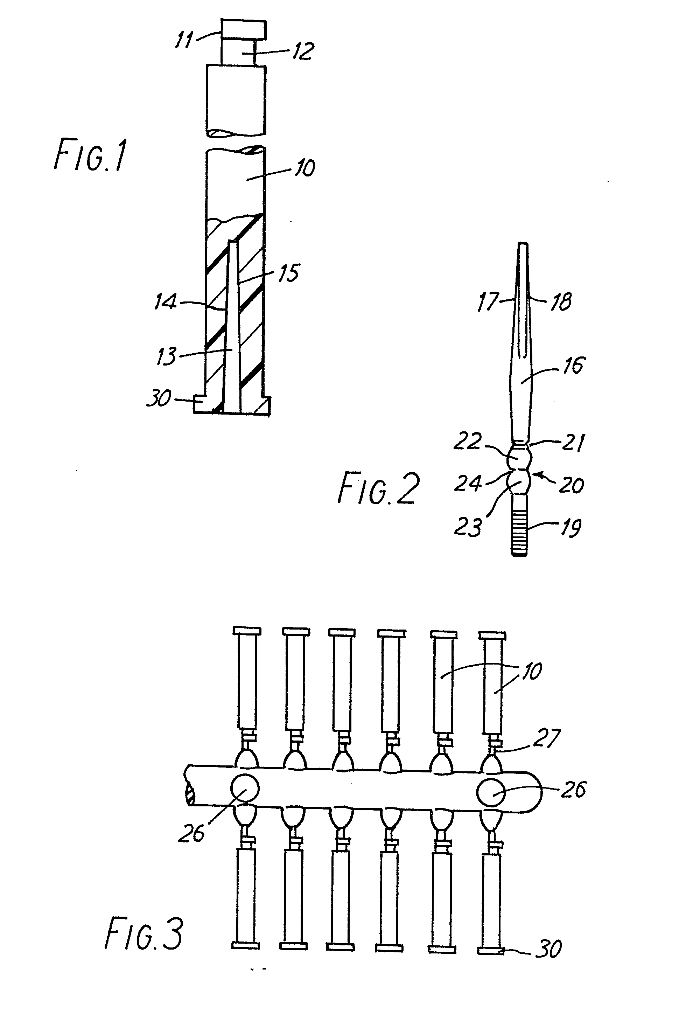

Referring first to Fig. 1, this shows a shank 10 which is moulded from a synthetic resin material. The shank is cylindrical and at its upper end has the conventional flat 11 and part-annular groove 12 for engagement with a latching-type dental handpiece. The groove 12 is engaged by the latch of the handpiece and the flat 11 cooperates with a flat on a driving collar to effect rotation of the shank. At the lower end of the shank 10 a socket 13 is formed. The open outer end of the socket is circular but the sides of the socket taper inwards to form two opposed flats 14 and 15 on opposite sides of the socket 13.

As seen in Fig.2 a metallic end-piece is formed at one end with a spigot 16 of complementary shape to the socket 13. This shape is similar to that of a conventional screw-driver, with two opposed flats 17 and 18 which converge towards the free end of the spigot 16. The end-piece has a threaded pin section 19 at its opposite end with an adjacent anchor section 20 which is joined by a shearing neck 21 to the spigot 16.

It will be seen that when the spigot 16 is inserted in the socket 13 during manufacture it is a close fit and ensures permanent attachment of the end-piece to the shank. The pin section 19, anchor section 20 and neck 21 project from the shank. In use the assembled device is mounted in the dentist's handpiece by means of the flat 11 and groove 12 and is rotated to screw the pin section 19 into the pre-drilled hole in the tooth. When the end of the pin section reaches the bottom of the hole, the neck 21 is subjected to additional torque and shears off. The anchor section 20 is left projecting from the tooth to serve as a foundation for the restoration.

As shown in Fig.2 the anchor section 20 comprises two bulbous portions 22 and 23 joined by a region 24 of smaller diameter. This shape is designed to provide a good bond with the restoration.

Referring now to Fig.3 it will be seen that a number of shanks 10 are moulded as parts of a single injection moulding. In this case twelve shanks 10 are formed in two sets of six projecting from opposite sides of a bar 25. The bar 25 has bosses 26 for the ejection of the moulding from the mould. Each shank 10 is joined to the bar 25 by a short stem 27 of small diameter which enables the shank to be broken off. Conveniently the pinning devices can be supplied to the dentist in the form of the moulding shown in Fig. 3 but with an end-piece assembled with each of the shanks. The dentist then breaks off a pinning device from the bar 25 as he needs it. A flange 30 around the socketed end of the shank facilitates handling of the device before and after shearing of the neck 21.

It will be evident that while the device shown has a cylindrical shank, a tapered shank may be provided in accordance with U.K. Patent Specification No. 1,597,483. The shapes of the socket 13 and spigot 16 may be varied providing that they match to give a close fit and have a flat to ensure rotary drive of the end-piece. The formation of the anchor portion 20 may be varied and it could, for example, have simply an extension of the thread on the pin section 19. Differences in shape and size of the portion below the neck 21 can be signalled to the dentist by the use of different colours for the synthetic resin forming the shank.

-5-

CLAIMS:

1. A dental pinning device comprising a shank formed from a synthetic resin material and a metallic end-piece engaged with the shank, the shank having at one end a formation for engagement in a latching-type dental hand-piece and at the other end a socket to receive the end-piece, the end-piece comprising a threaded pin, a shearing neck and a spigot for engagement in the socket, wherein the spigot and socket have complementary mating shapes including a driving flat to ensure rotation of the pin by the shank.

2. A device as claimed in claim 1 in which the spigot has two opposed flats which converge towards the free end of the spigot.

3. A device as claimed in claim 1 in which the end-piece has between the threaded pin and the shearing neck an anchor section intended to project from the tooth and receive the restoration, the anchor section comprising two bulbous portions separated by a region of smaller diameter.

4. A dental pinning device comprising a shank having at one end a formation for engagement in a latching-type dental hand-piece, a threaded pin, a shearing neck connecting the other end of the shank to the pin and an anchor section between the pin and the shearing neck, the anchor section comprising two bulbous portions separated by a region of smaller diameter.

FIG.1

FIG.2

FIG.3

European Patent
Office

**EUROPEAN SEARCH REPORT**

**0076084**

Application number

EP  82 30 4970

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | A 61 C    5/08 |
| X | US-A-3 675 328  (WEISSMAN) <br> * column 1, lines 41-64; figures 6-8 * | 1 | |
| A | * column 2, lines 58-60 * | 2 | |
| X | --- <br> WO-A-7 900 275  (SPANG) <br> * page 4, lines 16-29; figures 1-3 * | 1,3,4 | |
| X | --- <br> US-A-4 155 162  (IPCO) <br> * column 2, lines 1-13; figures 1-10 * | 1 | |
| | ----- | | |

TECHNICAL FIELDS
SEARCHED (Int. Cl. 3)

A 61 C

The present search report has been drawn up for all claims

| Place of search <br> THE HAGUE | Date of completion of the search <br> 09-12-1982 | Examiner <br> DURAND-SMET J.E.J.S. |
|---|---|---|